(19) Europäisches Patentamt
European Patent Office
Office européen des brevets

(11) **EP 3 413 220 A1**

(12) **EUROPEAN PATENT APPLICATION**

(43) Date of publication:
**12.12.2018 Bulletin 2018/50**

(51) Int Cl.:
***G06F 17/50*** *(2006.01)*

(21) Application number: **18175322.9**

(22) Date of filing: **31.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.06.2017 US 201715615816**

(71) Applicant: **GE Aviation Systems LLC**
**Grand Rapids, MI 49512-1991 (US)**

(72) Inventors:
- **CUMINGS, MacKenzie Dylan**
  **Grand Rapids, MI Michigan 49512-1991 (US)**

- **SCHROER, Robert**
  **Grand Rapids, MI Michigan 49512-1991 (US)**
- **HWANG, Sean**
  **Grand Rapids, MI Michigan 49512-1991 (US)**
- **VISSER, Nicholas Race**
  **Grand Rapids, MI Michigan 49512-1991 (US)**
- **ADIBHATLA, Sridhar**
  **Grand Rapids, MI Michigan 49512-1991 (US)**

(74) Representative: **Williams, Andrew Richard**
**GE International Inc.**
**GPO-Europe**
**The Ark**
**201 Talgarth Road**
**Hammersmith**
**London W6 8BJ (GB)**

(54) **GENERATING MODELS FOR REAL TIME EMBEDDED SYSTEMS THAT APPROXIMATE NON-EMBEDDED MODELS WHILE REDUCING COMPLEXITY ASSOCIATED WITH THE NON-EMBEDDED MODELS**

(57) Generation of models in real time embedded systems that approximate non-embedded models while reducing a complexity associated with the non-embedded models is provided herein. A system (100) can comprise a memory (108) coupled to a processor (110) that stores and executes executable components comprising an evaluation manager component (102) that identifies an input parameter (112) of a first model (114) based on a defined output parameter (116) of the first model (114) and a relation manager component (104) that determines one or more relations (118) in the first model (114). Further, the executable components can comprise a model generator manager component (106) that generates a second model (120) that approximates the first model (114) and includes a replication of the one or more relations (122) of the first model (114).

**FIG. 1**

EP 3 413 220 A1

## Description

STATEMENT REGARDING FEDERALLY SPONSORED RESEARCH OR DEVELOPMENT

This invention was made with Government support under Contract No.: DTFAWA-10-C-00046, Mod. 7 awarded by Federal Aviation Administration (FAA). The Government has certain rights in this invention.

TECHNICAL FIELD

The subject disclosure relates generally to generating models for real time embedded systems that approximate non-embedded models while reducing complexity associated with the non-embedded models by enabling the creation of an acceptably accurate model that is composed of computational methods acceptable for an embedded system.

BACKGROUND

Various simulations or physics-based models can be utilized for prediction, control, and/or optimization of a machine being modeled or simulated. Generally, a mathematical construct, which characterizes the process or the operation of the machine, and various measurements are utilized to replicate the behavior of the machine. The mathematical model can be implemented in a simulator to mimic the behavior of the machine. However, the mathematical model can be highly computationally intensive and, therefore, is limited for use on devices or systems with the processing capability to execute the highly computationally intensive mathematical models.

The above-described deficiencies of modeling operations are merely intended to provide an overview of some of the problems of current technology, and are not intended to be exhaustive. Other problems with the state of the art, and corresponding benefits of some of the various non-limiting embodiments described herein, may become further apparent upon review of the following detailed description.

SUMMARY

The following presents a simplified summary of the disclosed subject matter to provide a basic understanding of some aspects of the disclosed subject matter. This summary is not an extensive overview of the various aspects. It is intended neither to identify key or critical elements of the various aspects nor to delineate the scope of the various aspects. Its sole purpose is to present some concepts of the disclosure in a streamlined form as a prelude to the more detailed description that is presented later.

One or more aspects provide a system that can comprise a memory that stores executable components and a processor, operatively coupled to the memory, that executes the executable components. The executable components can comprise an evaluation manager component that identifies an input parameter of a first model based on a defined output parameter of the first model. The first model can be configured for execution within a first device. The system can also comprise a relation manager component that determines one or more relations in the first model. Relations of the one or more relations can comprise an intermediary parameter determined based on the input parameter(s) and a defined output parameter of the first model. Further, the system can comprise a model generator manager component that generates a second model that approximates the first model and includes a replication of the one or more relations of the first model.

Also, in one or more aspects, provided is a method that can comprise identifying, by a system comprising a processor, an input parameter(s) of a first model based on a determination of a defined output parameter derived from the first model. The method can also comprise determining, by the system, a network of relations in the first model. The network of relations can comprise an intermediary parameter(s) and the defined output parameter of the first model. The intermediary parameter can be determined based on the input parameter(s). Further, the method can comprise generating, by the system, a second model that includes a replication of the network of relations. The second model can approximate the first model.

In addition, according to one or more aspects, provided is machine-readable storage medium, comprising executable instructions that, when executed by a processor, facilitate performance of operations. The operations can comprise identifying an input parameter(s) of a first model based on a defined output parameter of the first model. The first model can be configured for execution within a first device. The operations can also comprise determining one or more relations in the first model. Relations of the one or more relations can comprise an intermediary parameter determined based on the input parameter and a defined output parameter of the first model. Further, the operations can comprise generating a second model that approximates the first model, wherein the second model comprises simplified relations of the one or more relations of the first model. The second model can be configured for execution on a second device, different from the first device.

To the accomplishment of the foregoing and related ends, the disclosed subject matter comprises one or more of the features hereinafter more fully described. The following description and the annexed drawings set forth in detail certain illustrative aspects of the subject matter. However, these aspects are indicative of but a few of the various ways in which the principles of the subject matter can be employed. Other aspects, advantages, and novel features of the disclosed subject matter will become apparent from the following detailed description when considered in conjunction with the drawings. It will also be appreciated that the detailed description may include additional or alternative aspects beyond those described in this summary.

BRIEF DESCRIPTION OF THE DRAWINGS

Various non-limiting embodiments are further described with reference to the accompanying drawings in which:

FIG. 1 illustrates an example, non-limiting, system for constructing a lightweight or simplified model based on decomposition of a complex model in accordance with one or more embodiments described herein;

FIG. 2 illustrates an example, non-limiting, system for generating a simplified model based on select parameters derived from a complex model in accordance with one or more embodiments described herein;

FIG. 3 illustrates an example, non-limiting, system for generating a simplified model based on select parameters derived from a complex model in accordance with one or more embodiments described herein;

FIG. 4 illustrates an example, non-limiting, system that employs machine learning to automate creation of models in accordance with one or more embodiments described herein;

FIG. 5 illustrates an example, non-limiting, method for generating accurate models in real time embedded systems that approximate non-embedded models while reducing a complexity associated with the non-embedded models in accordance with one or more embodiments described herein;

FIG. 6 illustrates an example, non-limiting, method for generating a model for use with embedded systems based on another model for use with non-embedded systems in accordance with one or more embodiments described herein;

FIG. 7 illustrates an example, non-limiting, method for generating a correction factor based on a set of input parameters in accordance with one or more embodiments described herein;

FIG. 8 illustrates an example, non-limiting, method for reducing complexity associated with a first model during generation of a second model in accordance with one or more embodiments described herein;

FIG. 9 illustrates an example, non-limiting, computing environment in which one or more embodiments described herein can be facilitated; and

FIG. 10 illustrates an example, non-limiting, networking environment in which one or more embodiments described herein can be facilitated.

DETAILED DESCRIPTION

One or more embodiments are now described more fully hereinafter with reference to the accompanying drawings in which example embodiments are shown. In the following description, for purposes of explanation, numerous specific details are set forth in order to provide a thorough understanding of the various embodiments. However, the various embodiments can be practiced without these specific details. In other instances, well-known structures and devices are shown in block diagram form in order to facilitate describing the various embodiments.

Discussed herein are various aspects that can relate to the generation of one or more computer simulations that reproduce behaviors of a machine or system, or a portion of the machine or system, using a model. The one or more computer simulations or models generated in accordance with the disclosed aspects can be a simplified version of a complex model such that extraneous elements that are not related to a defined output being analyzed are removed from consideration. In accordance with some implementations, a heavy or complex model can be deconstructed to create another model that is lightweight, or simplified. Further, the various aspects can provide one or more simulations or models that can be quickly executed (e.g., increased processing efficiency) while using reduced memory as compared to the heavy model.

Further, the various aspects discussed herein can address the complexity issue associated with creation of model or simulations. In a specific, non-limiting, example, an aircraft engine model can become complex due to dimensionality of the model. The dimensionality refers to the concept that the volume of a model's input space increases exponentially with every added input parameter. Thus, for a model with a dozen input parameters, it might not be possible to cover the entire input space with an accurate lookup table in a software system. Non-embedded engine models can achieve a high level of accuracy over a large input space by employing many complex calculations and iterative methods to relate inputs to outputs. Since these models are designed to execute (or run) on complex machines (e.g., personal computers, engineering workstations), speed of execution, determinacy of speed of execution, and, to some extent, the size of the executable software and the size of the model data, are not issues when developing these models. However, these considerations can be a concern when developing software for an embedded system. Furthermore, embedded software should not use constructs that can lead to system instability (e.g. dynamic memory allocation), whereas these constructs can be used freely in a non-embedded system. The various aspects provided herein solve the problem of complexity by enabling the creation of an acceptably accurate model that is composed of computational methods that are acceptable for an embedded system.

In a specific, non-limiting example, the various aspects can produce engine models for real-time embedded software that approximate highly accurate non-embedded engine models. One embodiment can approximate the output of an object oriented model, such as a Numerical Propulsion System Simulation (NPSS) engine model. The NPSS is a modeling framework that can be used for large-scale modeling of complete aircraft engines. An NPSS model is a model of a particular engine that is built around this framework and its data interfaces. The various aspects provided herein can be configured to execute significantly faster than an NPSS model and can be integrated into embedded software in an avionics system (or other type of system such as an Engine Control Unit (ECU)). The increased speed can be achieved by approximating the behavior of the NPSS model using a combination of lookup tables, mathematical approximations of relations between model parameters, and calculations extracted from the NPSS model or other object oriented model.

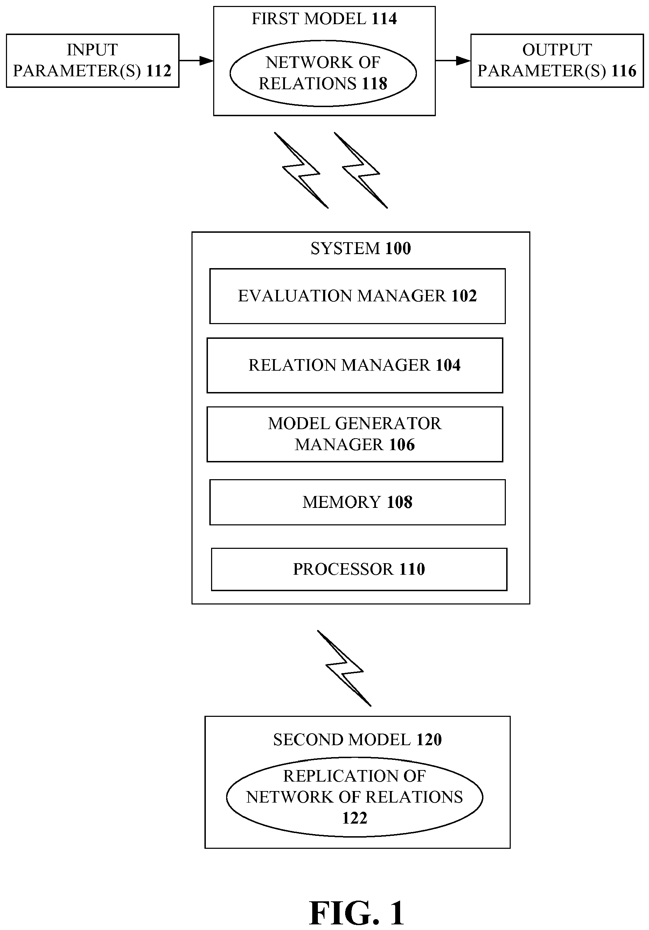

FIG. 1 illustrates an example, non-limiting, system 100 for constructing a lightweight or simplified model based on decomposition of a complex model in accordance with one or more embodiments described herein. The various aspects discussed herein can facilitate the generation of highly accurate models (including aircraft engine models), in real time embedded systems that can approximate the high-fidelity non-embedded models (e.g., engine models). Further, the various aspects can reduce complexity associated with models by enabling the creation of an acceptably accurate model that is composed of computational methods that are acceptable for an embedded system.

The system 100 can include an evaluation manager component 102, a relation manager component 104, a model generator manager component 106, at least one memory 108, and at least one processor 110. The evaluation manager component 102 can identify an input parameter 112 of a first model 114 based on a determination of a defined output parameter 116 derived from the first model 114. For example, a complex model can provide a complete model of an entire system or machine and can provide a multitude of outputs and associated parameters. However, only a subset of those outputs and associated parameters might be of interest for use in the embedded system. Therefore, the evaluation manager component 102 can identify the one or more output parameters of interest and correlate those output parameters to related input parameters. According to some implementations, more than one input parameter can be identified by the evaluation manager component 102 based on one or more defined output parameters.

The identification of the one or more output parameters of interest can be determined by the evaluation manager component 102 based on a received input identifying the output parameters of interest. For example, a user and/or entity can provide an indication of the output parameter(s) of interest. As utilized herein a user, an entity, or the like, can refer to a human, an actor, a computer, the Internet, a system (or another system), a commercial enterprise, a computer, a machine, machinery, and so forth, hereinafter referred to as a user, a client, and/or an entity, depending on the context.

Alternatively or additionally, the identification of the one or more output parameters of interest can be determined by the evaluation manager component 102 based on other criteria including, but not limited to, rules, parameters, objectives, and so on. For example, an objective can be to increase speed of an aircraft, manufacture more products per hour, decrease an amount of nonconforming product produced, and so on. Based on the stated objective, the evaluation manager component 102 can determine which outputs contribute to fulfillment of the other criteria and can map those outputs to the associated inputs.

The relation manager component 104 can determine a network of relations 118 in the first model 114. The network of relations 118 can include a relationship between the output parameter(s) and the input parameter(s). In an example, to obtain the output, the model can perform a calculation or other computation on one or more inputs to obtain at least one intermediary parameter. The at least one intermediary parameter can be an output of the model. However, in some embodiments, the at least one intermediary parameter can be utilized as an input for another calculation or computation to determine at least a second intermediary parameter. For example, the at least one intermediary parameter can be utilized in conjunction with one or more input parameters and/or one or more other intermediary parameters to obtain another intermediary parameter(s). Thus, the network of relations 118 can comprise at least one intermediary parameter and the defined output parameter 116 of the first model 114.

Further, the model generator manager component 106 can generate a second model 120 that includes a replication of the network of relations 122. The replication of the network of relations 122 can include a subset of the relations included in the network of relations 118. In another example, the replication of the network of relations 122 can include a modification of one or more relations from the network of relations 118.

The second model 120 can be a lightweight version of the first model 114. For example, the first model can be a complex, robust model, which can be deconstructed as discussed herein and at least one second model can be created with respect to output parameters of interest derived from the first model. The second model 120 can exclude one or more extraneous aspects of the first model 114, wherein the one or more extraneous aspects are not utilized to determine the output parameters of interest.

The at least one memory 108 can be operatively coupled to the at least one processor 110 and can store computer executable components and/or computer executable instructions. The at least one processor 110 can facilitate execution of the computer executable components and/or the computer executable instructions stored in the at least one memory 108. The term "coupled" or variants thereof can include various communications including, but not limited to, direct communications, indirect communications, wired communications, and/or wireless communications.

Further, the at least one memory 108 can store protocols associated with generating models in real time embedded systems that approximate non-embedded models while reducing a complexity associated with models by enabling the creation of an acceptably accurate model that is composed of computational methods acceptable for an embedded system as discussed herein. Further, the at least one memory 108 can facilitate action to control communication between the system 100, the first model 114, the second model 120, other models, and/or other systems, such that the system 100 can employ stored protocols and/or algorithms to achieve generation of simplified models in real-time as described herein.

It is noted that although the one or more computer executable components and/or computer executable instructions can be illustrated and described herein as components and/or instructions separate from the at least one memory 108 (e.g., operatively connected to at least one memory 108), the various aspects are not limited to this implementation. Instead, in accordance with various implementations, the one or more computer executable components and/or the one or more computer executable instructions can be stored in (or integrated within) the at least one memory 108. Further, while various components and/or instructions have been illustrated as separate components and/or as separate instructions, in some implementations, multiple components and/or multiple instructions can be implemented as a single component or as a single instruction. Further, a single component and/or a single instruction can be implemented as multiple components and/or as multiple instructions without departing from the example embodiments.

It should be appreciated that data store components (e.g., memories) described herein can be either volatile memory or nonvolatile memory, or can include both volatile and nonvolatile memory. By way of example and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of example and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). Memory of the disclosed aspects are intended to comprise, without being limited to, these and other suitable types of memory.

The at least one processor 110 can facilitate respective analysis of information related to model inputs, model outputs, and intermediary parameters of models. The at least one processor 110 can be a processor dedicated to analyzing and/or generating models based on data received, a processor that controls one or more components of the system 100, and/or a processor that both analyzes and generates models based on data received and controls one or more components of the system 100.

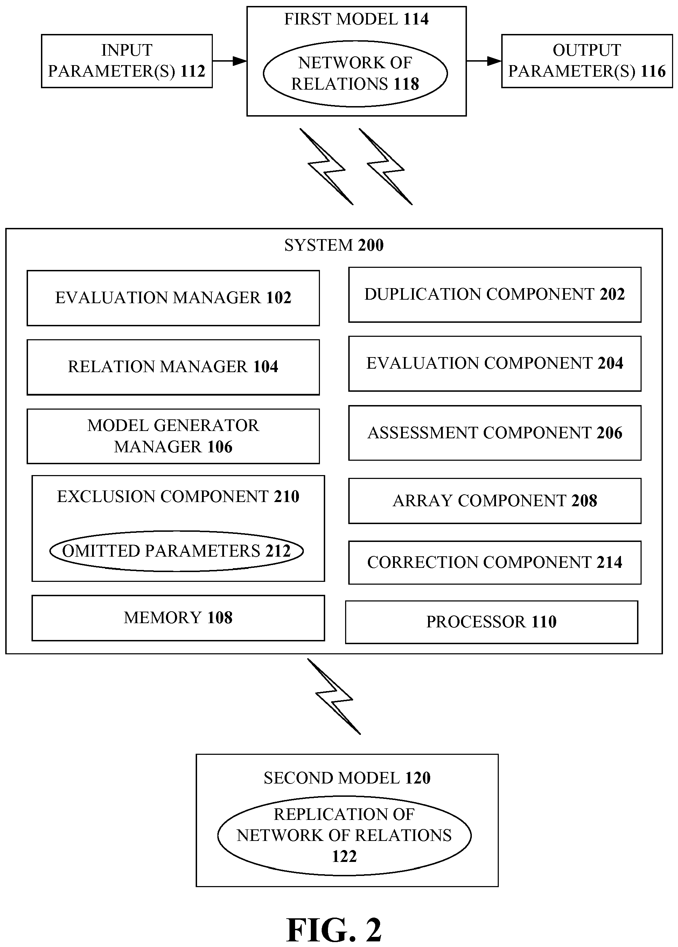

FIG. 2 illustrates an example, non-limiting, system 200 for generating a simplified model based on select parameters derived from a complex model in accordance with one or more embodiments described herein. Repetitive description of like elements employed in other embodiments described herein is omitted for sake of brevity. The system 200 can comprise one or more of the components and/or functionality of system 100, and vice versa.

The first model 114 can be a non-embedded model or a complex model designed to be executed on a complex computing device (e.g., a personal computer). The non-embedded model can include any number of dimensions, since there can be a large number of resources and processing capabilities associated with the complex computing device. The second model 120 can be an embedded model or a simplified model designed to be executed on embedded systems. Examples of embedded systems include, but are not limited to, portable devices, wearable devices, factory controllers, hybrid vehicles, and so on. An embedded system can include a single microcontroller chip or can include a multitude of microcontroller chips.

Accordingly, the various aspects provided herein can implement, or can facilitate implementation, of a model or simulation on an embedded system that has at least one dedicated function (e.g., execution of the model). Further, the embedded system can have real-time computing constraints, processing constraints, and/or memory constraints. Accordingly, the various aspects can address each of these constraints in order to improve processing efficiency of the embedded systems while conserving memory resources and increasing a computing speed associated with the model generation.

Thus, the various aspects can be specifically adapted to create models that can be integrated into an embedded system. In addition, the various aspects can utilize knowledge of the model that is to be approximated. This is in contrast to models that are developed solely with knowledge derived from probing the original model with different inputs.

In order to generate the second model, the evaluation manager component 102 can identify, from the first model 114 (e.g., the non-embedded model), a desired set of output parameters. Further, the evaluation manager component 102 can identify the input parameters that determine the desired set of output parameters.

The relation manager component 104 can identify a network of intermediary and output parameters in the first model. Based on the intermediary and output parameters of the first model, the model generator manager component 106 can analyze the network relations in the first model (e.g., the original model) and replicate the combination of parameters with software constructs that are suitable for embedded software. The replication of the combination of parameters can be facilitated by a duplication component 202 that can determine whether the type of relation is a simple calculation and/or algorithm. Based on a determination that the type of relation is a simple relation (e.g., a simple calculation or a simple algorithm), the duplication component 202 can reproduce the relation in software exactly. Thus, the relation from the first model 114 can be reproduced and included in the second model 120 by the duplication component 202 (no modifications are made). The exact reproduction of the relation can be made since it is a simple calculation and/or algorithm and an embedded system that executes the second model 120 should have the processing capability to perform the simple calculation/algorithm. However, if the relation is not a simple calculation/algorithm (cannot be easily performed without a large processing capability and/or memory capability), an evaluation component 204, an assessment component 206, an array component 208, and/or an exclusion component 210 can perform one or more manipulations, as will now be discussed.

The evaluation component 204 can determine whether the relation can be approximated by fitting a polynomial function to observed tuples in the relation. A polynomial function is an expression that comprises variable, indeterminates, and/or coefficients, and that involves the operations of addition, subtraction, multiplication, and/or non-negative integer exponents. A tuple is a finite sequence (or ordered list) of elements. Thus, an $n$-tuple is a sequence of $n$ elements, where $n$ is a non-negative integer.

Based on a determination by the evaluation component 204 that the relation can be approximated by fitting a polynomial function to the observed tuples, the evaluation component 204 can determine a coefficient for the polynomial function. Further, the evaluation component 204 can add the polynomial function to the embedded model (e.g., the second model 120).

According to an additional or alternative implementation, the assessment component 206 can determine if the relation can be approximated by a linear combination of functions, or an invertible function of the linear combination of functions. A linear combination is an expression that can be constructed from a set of terms by multiplying each term of the set of terms by a constant value. The results are added to create the linear combination. For example, a linear combination of $x$ and $y$ is an expression in the form of $ax + by$, where $a$ and $b$ are constant values.

Based on a determination by the assessment component 206 that the relation can be approximated by a linear combination of functions or an invertible function of the linear combination of functions, the assessment component 206 can determine a linear combination of functions. The linear combination of functions can be added, by the assessment component 206, to the second model 120 in order to approximate the relation in the second model 120.

If the relation cannot be approximated by a linear combination of functions (or is not appropriate for the relation), the array component 208 can create a lookup table or database table. A lookup table is an array that replaces runtime computation(s) with a simpler array indexing operation. The array component 208 can choose breakpoints to closely approximate the relation (from the first model 114) while limiting the size of the table to an acceptable size or a defined table size, which can be determined based on processing capabilities of a device on which the second model is intended to be executed.

In implementations where a functional approximation involves too many input parameters to be practicable for an imbedded system, a subset of parameters that correlate to the output can be selected and omitted (e.g., omitted parameters 212) from an approximation by the exclusion component 210. The exclusion component 210 can communicate the resulting approximation, which can be utilized by the evaluation component 204, the assessment component 206, and/or the array component 208 in accordance with the various aspects discussed above.

Further, according to some implementations, correction factors can be generated, by a correction component 214, based on the omitted parameters 212. The correction factors can be functional approximations of the difference (additive or multiplicative) between the uncorrected approximation of the output parameter and the "ideal" output parameter over a set of input parameters that include the omitted parameters. Further to these implementations, the correction component 214, when approximating functional relations, can devise separate approximations for different parts of the domain of the function. For example, the separate approximations can be determined based on an increase to the overall accuracy of the approximation due to the separate approximations.

In some implementations, one or more of the duplication component 202, the evaluation component 204, the assessment component 206, the array component 208, and/or the exclusion component 210 can be utilized in order to create the second model 120. For example, depending on the one or more output parameters of interest, various relations can be determined and simplification of the various relations can be performed as discussed herein.

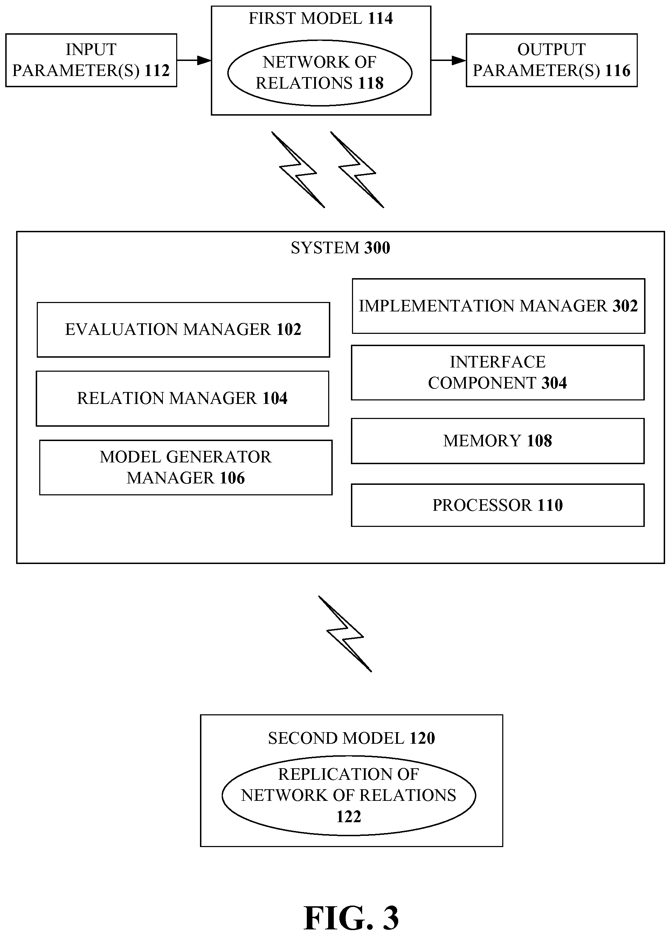

FIG. 3 illustrates an example, non-limiting, system 300 for generating a simplified model based on select parameters derived from a complex model in accordance with one or more embodiments described herein. Repetitive description of like elements employed in other embodiments described herein is omitted for sake of brevity. The system 300 can comprise one or more of the components and/or functionality of system 100 and/or system 200, and vice versa.

The evaluation manager component 102 can identified a set of output parameters 116 of interest from a first model 114 and correlate the set of output parameters 116 to a set of input parameters 114 of the first model 114. The relation manager component 104 can identify a network of intermediary and output parameters in the first model. The intermediary and output parameters identified by the relation manager component 104 can be the parameters that are mostly or completely determined by a small number of input parameters and/or other parameters in the model network. Accordingly, combinations of parameters that mostly or completely determine each of the output parameters can be identified. Based on the combination of parameters, the model generator manager component 106 can analyze the network of relations 118 in the first model (e.g., the original model) and replicate the combination of parameters with software constructs that are suitable for embedded software.

An implementation manager component 302 can generate or can facilitate generation of instructions for coding the network of functional relations as subroutines or a software model that computes the output parameters of interest from the related input parameters to create the second model 120. According to some implementations, the code can be automatically generated by the implementation manager component 302 based on the functional relations, the output parameters of interest, the intermediary parameters, and/or the input parameters.

According to some implementations, the system 300 can comprise an interface component 304 that can render the second model 120, or that can facilitate a rendering of the second model 120 on respective devices based on one or more requests for the second model 120. A device can also be called, and can contain some or all of the functionality of a system, subscriber unit, subscriber station, mobile station, mobile, mobile device, wireless terminal, remote station, remote terminal, access terminal, user terminal, terminal, wireless communication device, wireless communication apparatus, user agent, user device, or user equipment (UE). A device can be a cellular telephone, a cordless telephone, a Session Initiation Protocol (SIP) phone, a smart phone, a feature phone, a wireless local loop (WLL) station, a personal digital assistant (PDA), a laptop, a handheld communication device, a handheld computing device, a netbook, a tablet, a satellite radio, a data card, a wireless modem card, and/or another processing device for communicating over a wireless system. Further, although discussed with respect to wireless devices, the disclosed aspects can also be implemented with wired devices, or with both wired and wireless devices.

The interface component 304 (as well as other interface components discussed herein) can provide, a command line interface, a speech interface, Natural Language text interface, and the like. For example, a Graphical User Interface (GUI) can be rendered that provides a entity with a region or means to load, import, select, read, and so forth, various requests and can include a region to present the results of the various requests. These regions can include known text and/or graphic regions that include dialogue boxes, static controls, drop-down-menus, list boxes, pop-up menus, as edit controls, combo boxes, radio buttons, check boxes, push buttons, graphic boxes, and so on. In addition, utilities to facilitate the conveyance of information, such as vertical and/or horizontal scroll bars for navigation and toolbar buttons to determine whether a region will be viewable, can be employed. Thus, it might be inferred that the entity did want the action performed.

The entity can also interact with the regions to select and provide information through various devices such as a mouse, a roller ball, a keypad, a keyboard, a pen, gestures captured with a camera, a touch screen, and/or voice activation, for example. According to an aspect, a mechanism, such as a push button or the enter key on the keyboard, can be employed subsequent to entering the information in order to initiate information conveyance. However, it is to be appreciated that the disclosed aspects are not so limited. For example, merely highlighting a check box can initiate information conveyance. In another example, a command line interface can be employed. For example, the command line interface can prompt the entity for information by providing a text message, producing an audio tone, or the like. The entity can then provide suitable information, such as alphanumeric input corresponding to an option provided in the interface prompt or an answer to a question posed in the prompt. It is to be appreciated that the command line interface can be employed in connection with a GUI and/or Application Programming Interface (API). In addition, the command line interface can be employed in connection with hardware (e.g., video cards) and/or displays (e.g., black and white, and Video Graphics Array (EGA)) with limited graphic support, and/or low bandwidth communication channels.

According to a specific example related to an aviation engine, the various aspects can produce highly accurate aircraft engine models (e.g., the second model 120 of FIG. 1) for real time embedded software that approximates non-embedded engine models (e.g., the first model 114 of FIG. 1). For example, engine models can be integrated into embedded software in an avionics system. NPSS (numerical propulsion system simulation) is a modeling framework that can be used for large-scale modeling of complete aircraft engines. An NPSS model is a model of a particular engine that is built around this framework and its data interfaces. An increased processing speed of the models (e.g., the second model 120) constructed as discussed herein can be achieved by approximating the behavior of the NPSS model (e.g., the first model 114). In an example, the behavior can be approximated by using a combination of lookup tables, mathematical approximations of relations between engine model parameters, and calculations derived from the NPSS engine model (e.g., the first model 114).

Continuing the above example, an engine model (e.g., the second model 120) can be constructed as a combination of numerical calculations based on the NPSS model (e.g., the first model 114) and numerical functions fit by regressions to data collected from the NPSS model and lookup tables that comprise fewer than a defined number of dimensions (e.g., five dimensions, ten dimensions, and so on). The engine model can be composed of steady-state results taken from the NPSS engine model and the embedded engine model can solve the problem of complexity by enabling the creation of an acceptably accurate engine model that is composed of computational methods that are acceptable for an embedded system (e.g., an amount of error is within a threshold error level).

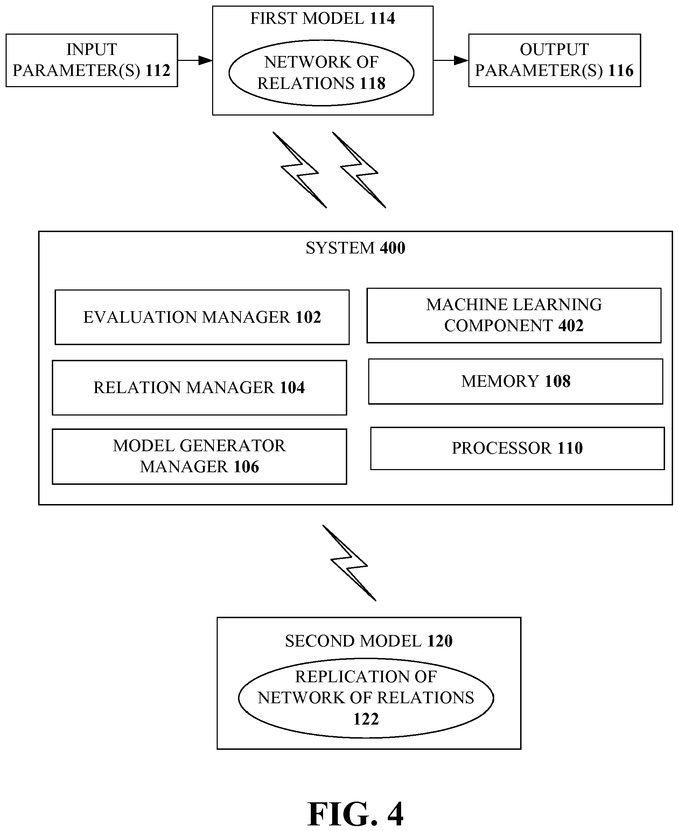

FIG. 4 illustrates an example, non-limiting, system 400 that employs machine learning to automate creation of models in accordance with one or more embodiments described herein. Repetitive description of like elements employed in other embodiments described herein is omitted for sake of brevity. The system 400 can comprise one or more of the components and/or functionality of system 100, system 200, and/or system 300, and vice versa.

The system 400 can include a machine learning and reasoning component 402, which can be utilized to automate one or more of the disclosed aspects. The machine learning and reasoning component 402 can employ automated learning and reasoning procedures (e.g., the use of explicitly and/or implicitly trained statistical classifiers) in connection with performing inference and/or probabilistic determinations and/or statistically-based determinations in accordance with one or more aspects described herein.

For example, the machine learning and reasoning component 402 can employ principles of probabilistic and decision theoretic inference. Additionally or alternatively, the machine learning and reasoning component 402 can rely on predictive models constructed using machine learning and/or automated learning procedures. Logic-centric inference can also be employed separately or in conjunction with probabilistic methods.

The machine learning and reasoning component 402 can infer, for one or more output parameters of interest, one or more intermediate parameters and/or one or more input parameters that correspond to the output parameters of interest. Based on this knowledge, the machine learning and reasoning component 402 can make an inference based on a simplification of one or more relations and/or elimination of one or more input parameter and/or one or more intermediate parameter.

As used herein, the term "inference" refers generally to the process of reasoning about or inferring states of the system, a component, a module, the environment, and/or models from a set of observations as captured through events, reports, data, and/or through other forms of communication. Inference can be employed to identify a specific context or action, or can generate a probability distribution over states, for example. The inference can be probabilistic. For example, computation of a probability distribution over states of interest based on a consideration of data and/or events. The inference can also refer to techniques employed for composing higher-level events from a set of events and/or data. Such inference can result in the construction of new events and/or actions from a set of observed events and/or stored event data, whether or not the events are correlated in close temporal proximity, and whether the events and/or data come from one or several events and/or data sources. Various classification schemes and/or systems (e.g., support vector machines, neural networks, logic-centric production systems, Bayesian belief networks, fuzzy logic, data fusion engines, and so on) can be employed in connection with performing automatic and/or inferred action in connection with the disclosed aspects.

The various aspects, for example, in connection with producing models for embedded system based on knowledge derived from one or more complex models generated through implementation of a non-embedded system, can employ various artificial intelligence-based schemes for carrying out various aspects thereof. For example, a process for determining if a relation or a modified relation is expected to result in a similar output parameter as an output parameter determined to be of interest, can be enabled through an automatic classifier system and process.

A classifier is a function that maps an input attribute vector, x = (x1, x2, x3, x4, xn), to a confidence that the input belongs to a class. In other words, f(x) = confidence(class). Such classification can employ a probabilistic and/or statistically-based analysis (e.g., factoring into the analysis utilities and costs) to prognose or infer an action that should be employed to determine how an asset is expected to perform when confronted with one or more different types of networks of relations. In the case of models, for example, attributes can be identification of one or more output parameters of interest, and the classes can be a intermediary parameter and/or input parameter.

A support vector machine (SVM) is an example of a classifier that can be employed. The SVM operates by finding a hypersurface in the space of possible inputs, which hypersurface attempts to split the triggering criteria from the non-triggering events. Intuitively, this makes the classification correct for testing data that can be similar, but not necessarily identical to training data. Other directed and undirected model classification approaches (e.g., naive Bayes, Bayesian networks, decision trees, neural networks, fuzzy logic models, and probabilistic classification models) providing different patterns of independence can be employed. Classification as used herein, can be inclusive of statistical regression that is utilized to develop models of priority.

One or more aspects can employ classifiers that are explicitly trained (e.g., through a generic training data) as well as classifiers that are implicitly trained (e.g., by observing and recording asset behavior, by receiving extrinsic information, and so on). For example, SVM's can be configured through a learning or training phase within a classifier constructor and feature selection module. Thus, a classifier(s) can be used to automatically learn and perform a number of functions, including but not limited to determining according to a predetermined criteria a network of relations in a first model, a determination of a simplification of the network of relations, and so forth. The criteria can include, but is not limited to, similar network relations, related information, and so forth.

Additionally or alternatively, an implementation scheme (e.g., a rule, a policy, and so on) can be applied to control and/or regulate model simplification and resulting actions, inclusion of one or more parameters (e.g., input parameter, intermediate parameter) to determine an output of interest, and so forth. In some implementations, based upon a predefined criterion, the rules-based implementation can automatically and/or dynamically interpret types of relations. In response thereto, the rule-based implementation can automatically interpret and carry out functions associated with the types of relations and output parameters of interest by employing a predefined and/or programmed rule(s) based upon any desired criteria.

Methods that can be implemented in accordance with the disclosed subject matter, will be better appreciated with reference to the following flow charts. While, for purposes of simplicity of explanation, the methods are shown and described as a series of blocks, it is to be understood and appreciated that the disclosed aspects are not limited by the number or order of blocks, as some blocks can occur in different orders and/or at substantially the same time with other blocks from what is depicted and described herein. Moreover, not all illustrated blocks can be required to implement the disclosed methods. It is to be appreciated that the functionality associated with the blocks can be implemented by software, hardware, a combination thereof, or any other suitable means (e.g. device, system, process, component, and so forth). Additionally, it should be further appreciated that the disclosed methods are capable of being stored on an article of manufacture to facilitate transporting and transferring such methods to various devices. Those skilled in the art will understand and appreciate that the methods could alternatively be represented as a series of interrelated states or events, such as in a state diagram. According to some implementations, a machine-readable storage medium, comprising executable instructions that, when executed by a processor, facilitate performance of the methods. According to other implementations, a non-transitory computer-readable medium, comprising executable instructions that, when executed by a processor, facilitate performance of the methods.

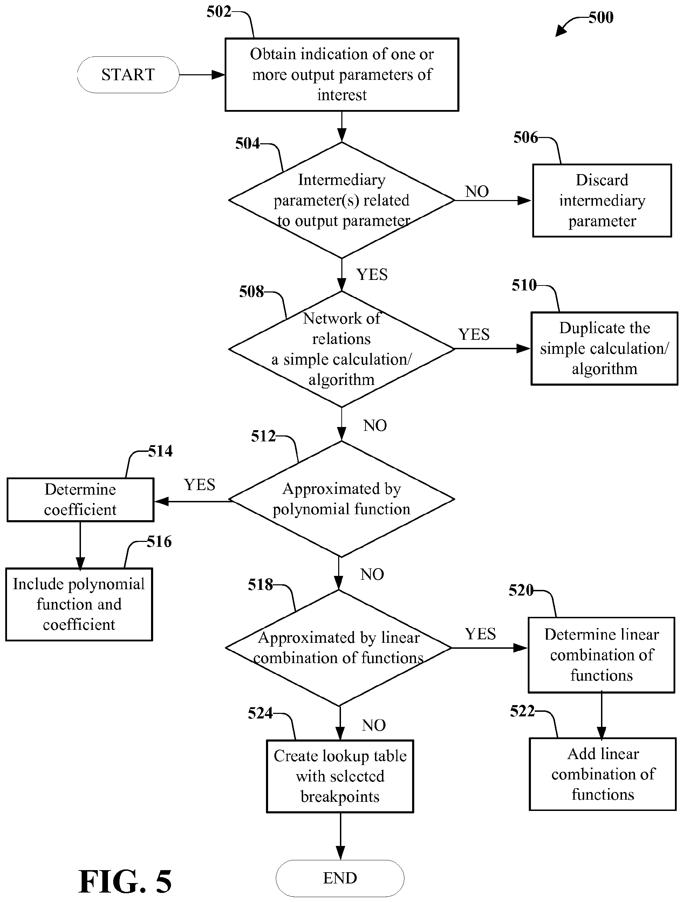

FIG. 5 illustrates an example, non-limiting, method 500 for generating accurate models in real time embedded systems that approximate non-embedded models while reducing a complexity associated with the non-embedded models in accordance with one or more embodiments described herein. At 502, a system comprising a processor, can obtain an indication of one or more outputs of interest associated with a first model. The first model can be configured for execution on a device or system that employs non-embedded software to perform various computing functions, including execution of the first model.

At 504, a determination is made whether an intermediary parameter of the first model is associated with at least one output of the one or more outputs of interest. According to some implementations, the intermediary parameter can be derived from one or more input parameters. However, according to some implementations the intermediary parameter can be a same parameter as an input parameter.

If there is no association between the intermediary parameter and an output of interest ("NO"), the intermediary parameter is discarded at 506 (e.g., is not included in a second model). If there is an association, at 508, a determination is made whether a network of relations of the intermediary parameter and the output parameter of interest is expressed as a simple calculation and/or a simple algorithm. If yes, at 510, the simple calculation or simple algorithm is reproduced in the second model. Thus, there are no modifications made to the simple calculation or simple algorithm.

If the determination at 508 is that the network of relations is not expressed as a simple calculation and/or a simple algorithm ("NO"), at 512 a determination is made whether the network of relations can be approximated by fitting a polynomial function to an observed tuple included in the network of relations. If yes, at 514 coefficients for the polynomial function are determined and, at 516, the polynomial function and the coefficients can be included in the second model.

If the network of relations cannot be approximated by fitting the polynomial function ("NO"), at 518, a determination is made whether the network of relations can be approximated by a linear combination of functions. The linear combination of functions can approximate the relationship of the first model within the second model. If yes, at 520, the linear combination of functions is determined and, at 522, the linear combination of functions is added to the second model.

If there is no functional approximation feasible for a relation ("NO"), at 524, a lookup table with at least one breakpoint is created. The breakpoint (or more than one breakpoint) can be selected to approximate the relation closely while limiting a size of the table below a threshold table size. In such a manner, a simplified model can be executed by devices and/or systems that have limited processing and/or memory capabilities.

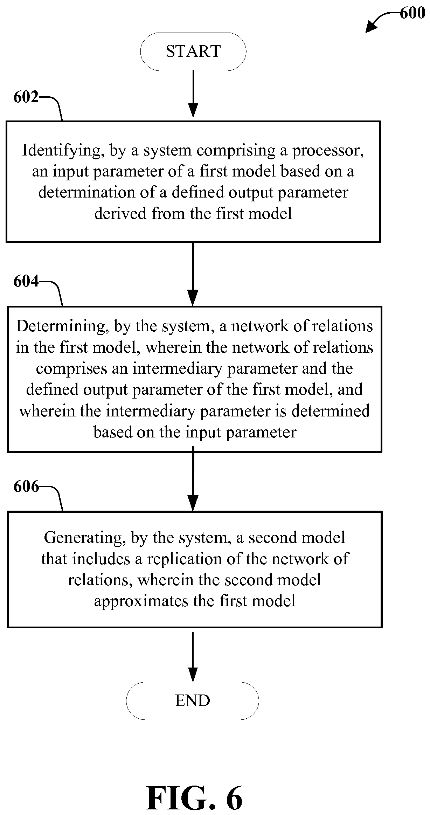

FIG. 6 illustrates an example, non-limiting, method 600 for generating a model for use with embedded systems based on another model for use with non-embedded systems in accordance with one or more embodiments described herein. At 602, a system comprising a processor, can identify an input parameter of a first model based on a determination of a defined output parameter derived from the first model. For example, the defined output parameter can be a parameter of interest for modeling or simulation.

At 604, the system can determine a network of relations in the first model. The network of relations can comprise an intermediary parameter and the defined output parameter of the first model. The intermediary parameter can be determined based on the input parameter.

The system can generate a second model that includes a replication of the network of relations, at 606. The second model can approximate the first model. According to an implementation, generating the second model can comprise generating the second model for execution with a real time embedded system, and wherein the first model is executed within a non-embedded system. According to another implementation, generating the second model can comprise reducing a complexity associated with the first model. Further to this implementation, reducing the complexity can comprise simplifying at least one computation employed during execution of the first model.

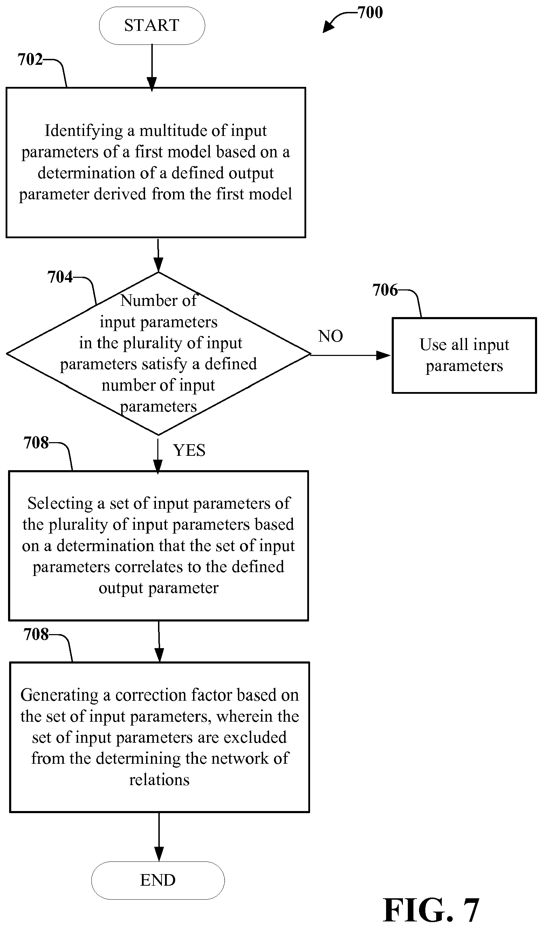

FIG. 7 illustrates an example, non-limiting, method 700 for generating a correction factor based on a set of input parameters in accordance with one or more embodiments described herein. At 702, a system comprising a processor, can identify a plurality of input parameters of a first model based on a determination of a defined output parameter derived from the first model.

At 704, a determination can be made whether a number of input parameters in the plurality of input parameters satisfies a defined number of input parameters. For example, the defined number of input parameters can be a threshold quantity of input parameters. If the determination is that the number of input parameters does not satisfy the defined number of input parameters ("NO"), at 706, all the input parameters are incorporated into the second model. In this implementation, the number of input parameters is a quantity that can be supported in the second model (e.g., is a low quantity or number of parameters).

If the determination is that the number of input parameters satisfies the defined number of input parameters, it indicates that there is a large quantity of input parameters that might not be supported by an embedded device. Thus, at 708, a number of input parameters of the plurality of input parameters is selected. The selection can be based on a determination that the set of input parameters correlates to the defined output parameter.

At 710, a correction factor can be generated based on the set of input parameters. The correction factor can be a functional approximation of a difference between an uncorrected approximation of the defined output parameter and an ideal output parameter determined from the plurality of input parameters. Further, the set of input parameters can be excluded from the determining the network of relations.

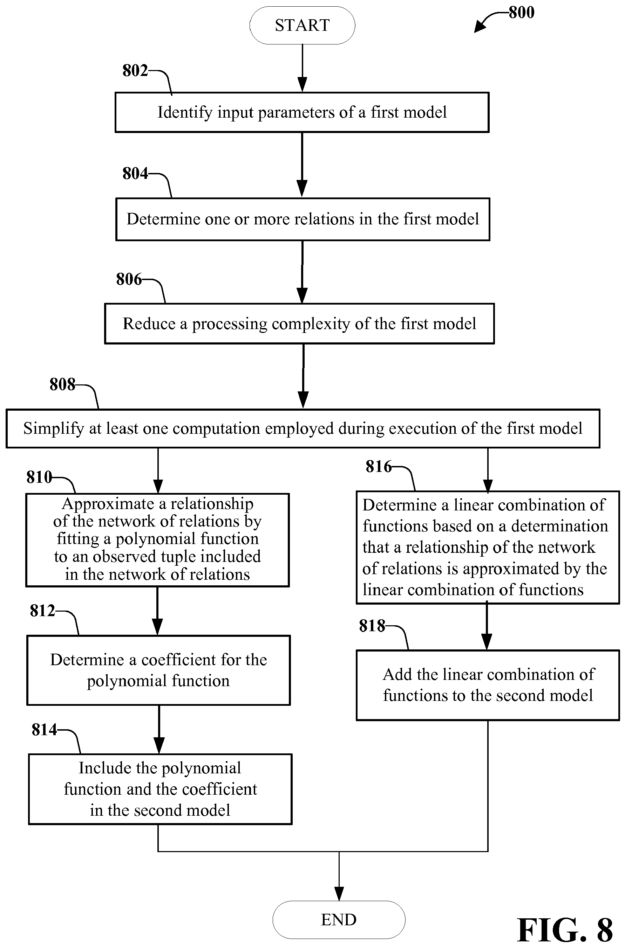

FIG. 8 illustrates an example, non-limiting, method for reducing complexity associated with a first model during generation of a second model in accordance with one or more embodiments described herein. At 802, input parameters of a first model are identified. The input parameters can be identified based on a defined output parameter of the first model. At 804, one or more relations in the first model are determined. Relations of the one or more relations can comprise intermediary parameters determined based on the input parameter and the defined output parameter of the first model.

At 806, a processing complexity of the first model can be reduced. According to an implementation, the first model can be executed within a non-embedded system and the second model can be intended for execution with a real time embedded system. For example, reducing the processing complexity of the first model can include simplifying, at 808, at least one computation employed during execution of the first model. If a relationship of the network of relations is expressed as a simple calculation or as a simple algorithm, the network of relations is not complex and can be reproduced exactly in the second model.

According to an implementation, reducing the complexity can include, at 810, approximating a relationship of the network of relations by fitting a polynomial function to an observed tuple included in the network of relations. Further to this implementation, at 812 a coefficient for the polynomial function can be determined. The polynomial function and the coefficient can be included in the second model, at 814.

According to an alternative or additional implementation, reducing the complexity can include, at 816, determining a linear combination of functions based on a determination that a relationship of the network of relations is approximated by the linear combination of functions. The linear combination of functions can be added to the second model, at 818. Accordingly, the second model can be executed on a real time embedded system as discussed herein.

To explain the various aspects discussed herein in further detail, various examples were performed and results of the examples will now be discussed. It is noted that although the following will describe specific parameters of an aircraft engine simulation, the disclosed aspects are not limited to these parameters or implementations. Instead other types of machine and/or systems can be simulated in accordance with the various aspects discussed herein.

In the following discussion, the second model 120 of FIG. 1 is referred to as a "hybrid" engine model that can attempt to extend a High-Fidelity Engine Model (e.g., the first model 114 of FIG. 1) to support all combinations of engine loads and bleed settings of an engine. The model can comprise a combination of lookup tables, mathematical approximations of relations between engine model parameters, and calculations extracted from the NPSS engine model. The general structure of the model as described herein can be used to create its contents.

Further, the performance of the second model 120 can be evaluated in terms of memory requirements, execution time, and the accuracy of its outputs. Execution of the model might utilize a lower amount of memory space and might be executed quicker, as compared with execution of the first model 114. In an example, non-limiting, computer implementation, the examples were performed on a GE General Processor Module (GPM300) computer, which can be representative of the hardware on which the various aspects can be implemented. It was determined that for execution of the second model, 39 MB of Random Access Memory (RAM) and 39 MB of Non-Volatile Memory (NVM) was utilized. Further, a large percentage (e.g., 99%) of the executions were performed in 0.363 milliseconds or less. For inputs randomly selected from expected ranges of use, observed errors within the engine model were normally distributed, with standard deviations of about 11.82 rpm for N1K (corrected engine speed), 68.68 lbf for FN (thrust) and 141.30 lbm/hr for WF36 (fuel flow).

A five-dimensional lookup table can closely approximate an Adaptive Engine Model for nominal engine loads and bleed settings. However, in a production system, an engine model should support all combinations of loads and bleed settings. The approach taken to implement the high-fidelity engine model can be utilized to create a lookup table of NPSS steady-state results. For the following examples, it was determined that it might not be feasible to extend the approach to an engine model that includes engine loads and bleed settings because it might require the addition of five dimensions to the lookup table, resulting in a ten-dimensional table. Such a table might require either more memory than an embedded system can spare, or fail to represent the engine accurately.

Accordingly, in some implementations, instead of a creating a lookup table, an engine model can be constructed that uses a combination of numerical calculations copied from the NPSS model, numerical functions fit by regressions to data collected from the NPSS model, and/or lookup tables with fewer than ten dimensions, composed of steady-state results taken from the NPSS engine model.

Since the model consists of a combination of numerical calculations and table lookups, it is referred to as the "Hybrid Engine Model." The 5-dimensional lookup table for nominal bleeds and loads will be referred to as the "Tabular Engine Model."

The general pattern of the example design was built around the concept of power management in the engine. Instead of relating model inputs to model outputs directly, key parameters such as temperatures, pressures, and fan speeds internal to the engine were calculated and used to calculate output values.

As an example, the Tabular Engine Model's input parameters can be altitude, Mach, DISA, throttle lever angle (TLA), and engine deterioration. The Hybrid Engine Model can have these same input parameters, but also can have the engine precooler switch, cabin air conditioning settings, wing anti-ice switch, cowl anti-ice switch, and customer power extraction (load). As output, the Hybrid Engine Model produces N1K, corrected FN, and fuel flow.

As it relates to intermediary parameters, internally, the model can be divided into blocks, some of which can produce outputs (e.g., intermediary parameters), which can be passed as inputs to other blocks. These parameters are also calculated by the NPSS Engine Model. In some cases, the Hybrid Engine Model uses the same methods to calculate these parameters as does the NPSS Model (e.g., simple calculations, simple algorithms). The parameters can include temperatures, pressures, and fan speeds. The temperatures can include T0 or ambient temperature; T2 or fan hub inlet total temperature; and T12 or fan tip inlet total temperature. The pressures can include P0 or ambient pressure and P2 or fan hub inlet total pressure. The fan speeds can include PCN12 or percent LP rotor physical speed and N1K or fan corrected speed (this parameter can be both an output of the model and an input to FN and Fuel Flow).

P0 and T0 can be calculated from standard formulas using the same method as is used in the NPSS model. T0 can be derived from Standard Temperature and DISA. P0 can be derived from altitude and Standard Temperature. Standard Temperature can be derived from altitude. The derivations can assume that the altitude will never be above the altitude boundary at 65616.798 feet, which can be above the allowed operating altitudes of various aircraft.

According to an implementation, N1K can be calculated from PCN12 and T12 using an algorithm copied from the NPSS model which can involve one or more numerical calculations and an iterative algorithm that converges from LP physical rotor speed to N1K.

The coefficients for this linear combination can be found by solving the formula:

$$Y = XK$$

where $Y$ is a column vector of observed values of PCN12, $X$ is a matrix of outputs of the functions corresponding to an observed value of PCN12, and K is a column vector of coefficients. The formula can be solved by multiplying the pseudoinverse of $X$ by $Y$, for example,

$$K = X^+ Y$$

T2 can be calculated from T0 and Mach using a known formula. P2 can be calculated from P0 and Mach using a known formula, which can involve an inlet factor that was approximated by fitting a polynomial function to observed inlet factors, N1K, and Mach.

To determine FN, FN is first approximated as a function of P2, Mach and N1K, and then corrected with a multiplicative correction factor. It is then further corrected with an additive correction factor.

FN can be approximated by a function that can be determined by fitting a polynomial function of the form

$$f(\text{Mach}, \text{N1K}) = FN / P2$$

to observed values of Mach, N1K, FN and P2.

The errors of the FN approximation were observed to generally follow curves along N1K and Mach. Three functions were fit to these curves. The first function was an additive correction factor for FN where the approximate FN is less than 2500 lbf. A second function was a multiplicative correction factor for FN where the approximate FN is greater than 2500 lbf and N1K is less than 5000 rpm. A third function was a multiplicative correction factor for FN where the approximate FN is greater than 2500 lbf and N1K is greater than 5000 rpm. These functions can be applied to the approximate FN.

A lookup table can be created which contains the mean ratios between the approximate FN and the NPSS Model's FN for each combination of bleed settings and certain values of engine deterioration and load. The output of an interpolated lookup in this table can be applied as a multiplicative correction to FN.

To determine Fuel Flow (WF36), Fuel Flow can be first approximated as a function of P2, Mach and T2, then corrected with a multiplicative correction factor. Fuel Flow (WF36) can be approximated by a function that was determined by fitting a polynomial function of the form

$$f(\text{Mach}, \text{T2}) = WF36 / P2$$

to observed values of Mach, T2, WF36 and P2.

For Mach and DISA Correction, the errors of the W36 approximation were observed generally to follow curves along Mach and DISA when TLA is less than or equal to 45°. A polynomial function was fit to this curve. This function is applied to the approximate Fuel Flow as a multiplicative correction factor.

For corrections for bleeds, load, and deterioration, a lookup table was created which contains the mean ratios between the approximate Fuel Flow and the NPSS Model's fuel flow for each combination of bleed settings and certain values of engine deterioration and load. The output of an interpolated lookup in this table is applied as a multiplicative correction to Fuel Flow.

In order to provide a context for the various aspects of the disclosed subject matter, FIGs. 18 and 19 as well as the following discussion are intended to provide a brief, general description of a suitable environment in which the various aspects of the disclosed subject matter can be implemented.

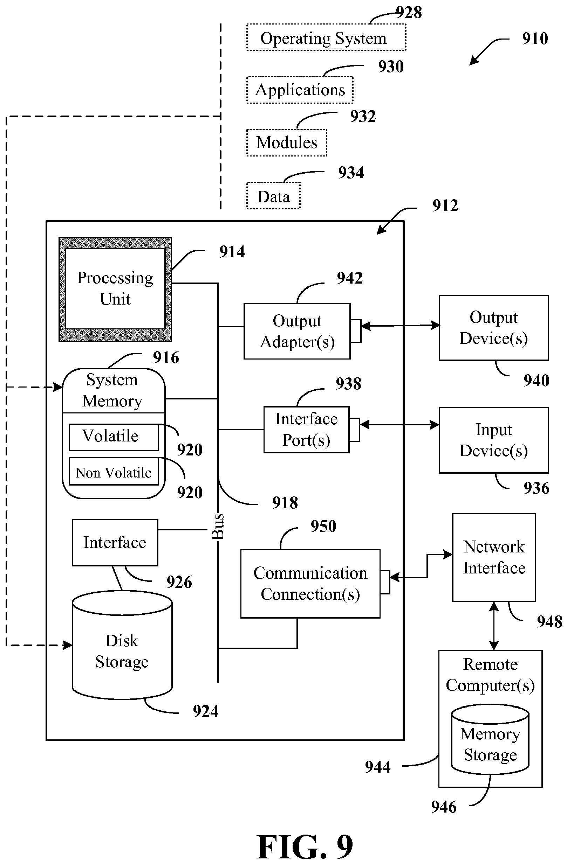

With reference to FIG. 9, an example environment 910 for implementing various aspects of the aforementioned subject matter includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Multi-core microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable PROM (EEPROM), or flash memory. Volatile memory 920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 912 also includes removable/non-removable, volatile/non-volatile computer storage media. FIG. 9 illustrates, for example a disk storage 924. Disk storage 924 includes, but is not limited to, devices like a magnetic disk drive, floppy disk drive, tape drive, Jaz drive, Zip drive, LS-100 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 924 to the system bus 918, a removable or non-removable interface is typically used such as interface 926.

It is to be appreciated that FIG. 9 describes software that acts as an intermediary between users and the basic computer resources described in suitable operating environment 910. Such software includes an operating system 928. Operating system 928, which can be stored on disk storage 924, acts to control and allocate resources of the computer 912. System applications 930 take advantage of the management of resources by operating system 928 through program modules 932 and program data 934 stored either in system memory 916 or on disk storage 924. It is to be appreciated that one or more embodiments of the subject disclosure can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 *via* interface port(s) 938. Interface port(s) 938 include, for example, a serial port, a parallel port, a game port, and a universal serial bus (USB). Output device(s) 940 use some of the same type of ports as input device(s) 936. Thus, for example, a USB port can be used to provide input to computer 912, and to output information from computer 912 to an output device 940. Output adapters 942 are provided to illustrate that there are some output devices 940 like monitors, speakers, and printers, among other output devices 940, which require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the system bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

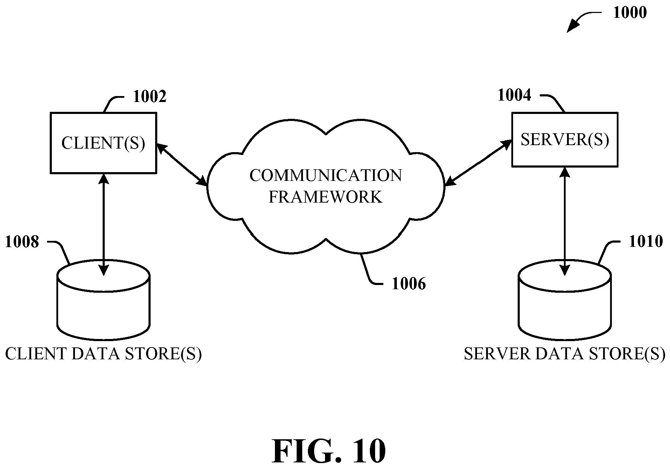

FIG. 10 is a schematic block diagram of a sample computing environment 1000 with which the disclosed subject matter can interact. The sample computing environment 1000 includes one or more client(s) 1002. The client(s) 1002 can be hardware and/or software (e.g., threads, processes, computing devices). The sample computing environment 1000 also includes one or more server(s) 1004. The server(s) 1004 can also be hardware and/or software (e.g., threads, processes, computing devices). The servers 1004 can house threads to perform transformations by employing one or more embodiments as described herein, for example. One possible communication between a client 1002 and servers 1004 can be in the form of a data packet adapted to be transmitted between two or more computer processes. The sample computing environment 1000 includes a communication framework 1006 that can be employed to facilitate communications between the client(s) 1002 and the server(s) 1004. The client(s) 1002 are operably connected to one or more client data store(s) 1008 that can be employed to store information local to the client(s) 1002. Similarly, the server(s) 1004 are operably connected to one or more server data store(s) 1010 that can be employed to store information local to the servers 1004.

Reference throughout this specification to "one embodiment," or "an embodiment," means that a particular feature, structure, or characteristic described in connection with the embodiment is included in at least one embodiment. Thus, the appearances of the phrase "in one embodiment," "in one aspect," or "in an embodiment," in various places throughout this specification are not necessarily all referring to the same embodiment. Furthermore, the particular features, structures, or characteristics can be combined in any suitable manner in one or more embodiments.

As used in this disclosure, in some embodiments, the terms "component," "system," "interface," "manager," and the like are intended to refer to, or comprise, a computer-related entity or an entity related to an operational apparatus with one or more specific functionalities, wherein the entity can be either hardware, a combination of hardware and software, software, or software in execution, and/or firmware. As an example, a component can be, but is not limited to being, a process running on a processor, a processor, an object, an executable, a thread of execution, computer-executable instructions, a program, and/or a computer. By way of illustration and not limitation, both an application running on a server and the server can be a component

One or more components can reside within a process and/or thread of execution and a component can be localized on one computer and/or distributed between two or more computers. In addition, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software application or firmware application executed by one or more processors, wherein the processor can be internal or external to the apparatus and can execute at least a part of the software or firmware application. As yet another example, a component can be an apparatus that provides specific functionality through electronic components without mechanical parts, the electronic components can comprise a processor therein to execute software or firmware that confer(s) at least in part the functionality of the electronic components. In an aspect, a component can emulate an electronic component via a virtual machine, e.g., within a cloud computing system. While various components have been illustrated as separate components, it will be appreciated that multiple components can be implemented as a single component, or a single component can be implemented as multiple components, without departing from example embodiments

In addition, the words "example" and "exemplary" are used herein to mean serving as an instance or illustration. Any embodiment or design described herein as "example" or "exemplary" is not necessarily to be construed as preferred or advantageous over other embodiments or designs. Rather, use of the word example or exemplary is intended to present concepts in a concrete fashion. As used in this application, the term "or" is intended to mean an inclusive "or" rather than an exclusive "or." That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Inference can also refer to techniques employed for composing higher-level events from a set of events and/or data. Such inference results in the construction of new events or actions from a set of observed events and/or stored event data, whether the events are correlated in close temporal proximity, and whether the events and data come from one or several event and data sources. Various classification schemes and/or systems (e.g., support vector machines, neural networks, expert systems, Bayesian belief networks, fuzzy logic, and data fusion engines) can be employed in connection with performing automatic and/or inferred action in connection with the disclosed subject matter.

In addition, the various embodiments can be implemented as a method, apparatus, or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable device, machine-readable device, computer-readable carrier, computer-readable media, machine-readable media, computer-readable (or machine-readable) storage/communication media. For example, computer-readable media can comprise, but are not limited to, a magnetic storage device, e.g., hard disk; floppy disk; magnetic strip(s); an optical disk (e.g., compact disk (CD), a digital video disc (DVD), a Blu-ray Disc™ (BD)); a smart card; a flash memory device (e.g., card, stick, key drive); and/or a virtual device that emulates a storage device and/or any of the above computer-readable media. Of course, those skilled in the art will recognize many modifications can be made to this configuration without departing from the scope or spirit of the various embodiments

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the subject matter has been described herein in connection with various embodiments and corresponding FIGs, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

Various aspects and embodiments of the present invention are defined by the following numbered clauses:

1. A system, comprising:

a memory that stores executable components; and

a processor, operatively coupled to the memory, that executes the executable components, the executable components comprising:

an evaluation manager component that identifies an input parameter of a first model based on a defined output parameter of the first model, wherein the first model is configured for execution by a non-embedded device;

a relation manager component that determines one or more relations in the first model, wherein relations of the one or more relations comprise an intermediary parameter determined based on the input parameter and the defined output parameter of the first model; and

a model generator manager component that generates a second model that approximates the first model and includes a replication of the one or more relations of the first model, wherein the second model is configured for execution by an embedded device.

2. The system of clause 1, further comprising a duplication component that reproduces a relation of the one or more relations based on a determination that the relation is expressed as a simple calculation or as a simple algorithm.

3. The system of any preceding clause, further comprising an evaluation component that determines a polynomial function and a coefficient for inclusion in the second model, wherein the polynomial function is fitted to an observed tuple included in a relation of the one or more relations in the first model.

4. The system of any preceding clause, further comprising an assessment component that adds a linear combination of functions to the second model based on a determination that a relation of the one or more relations is approximated by the linear combination of functions, wherein the linear combination of functions approximates the relation in the second model.

5. The system of any preceding clause, further comprising an array component that generates a lookup table comprising at least one breakpoint based on a determination that the at least one breakpoint approximates a relation of the one or more relations while retaining a database table to a defined table size.

6. A method, comprising:

identifying, by a system comprising a processor, an input parameter of a first model based on a determination of a defined output parameter derived from the first model;

determining, by the system, a network of relations in the first model, wherein the network of relations comprises an intermediary parameter and the defined output parameter of the first model, and wherein the intermediary parameter is determined based on the input parameter; and

generating, by the system, a second model that includes a replication of the network of relations, wherein the second model approximates the first model.

7. The method of any preceding clause, wherein the generating the second model comprises generating the second model for execution by an embedded system, and wherein the first model is executed by a non-embedded system.

8. The method of any preceding clause, wherein the generating the second model comprises reducing a complexity associated with the first model.

9. The method of any preceding clause, wherein the reducing the complexity comprises simplifying at least one computation employed during execution of the first model.

10. The method of any preceding clause, wherein the generating the second model comprises reproducing the network of relations based on a determination that a relationship of the network of relations is expressed as a simple calculation or as a simple algorithm.

11. The method of any preceding clause, wherein the generating the second model comprises:

> determining a relationship of the network of relations is approximated by fitting a polynomial function to an observed tuple included in the network of relations;
>
> determining a coefficient for the polynomial function; and
>
> including the polynomial function and the coefficient in the second model.

12. The method of any preceding clause, wherein the generating the second model comprises:

> determining a linear combination of functions based on a determination that a relationship of the network of relations is approximated by the linear combination of functions; and
>
> adding the linear combination of functions to the second model, wherein the linear combination of functions approximates the relationship in the second model.

13. The method of any preceding clause, wherein the generating the second model comprises creating a lookup table that comprises a breakpoint, wherein the breakpoint is chosen to approximate a relation of the network of relations while confining the lookup table to a defined table size.

14. The method of any preceding clause, further comprising generating a correction factor based on the input parameter.

15. The method of any preceding clause, wherein the identifying the input parameter comprises identifying a plurality of input parameters that include the input parameter, the method further comprising:

> determining a number of input parameters in the plurality of input parameters satisfies a defined number of input parameters;
>
> selecting a set of input parameters from the plurality of input parameters based on a determination that the set of input parameters correlates to the defined output parameter; and
>
> generating a correction factor based on the set of input parameters, wherein the set of input parameters are excluded from the determining the network of relations.

16. The method of any preceding clause, wherein the correction factor is a functional approximation of a difference between an uncorrected approximation of the defined output parameter and an ideal output parameter determined from the plurality of input parameters.

17. A machine-readable storage medium, comprising executable instructions that, when executed by a processor, facilitate performance of operations, comprising:

> identifying an input parameter of a first model based on a defined output parameter of the first model, wherein the first model is configured for execution within a first device;
>
> determining one or more relations in the first model, wherein relations of the one or more relations comprise an intermediary parameter determined based on the input parameter and the defined output parameter of the first model; and
>
> generating a second model that approximates the first model, wherein the second model comprises simplified relations of the one or more relations of the first model and configured for execution within a second device.

18. The machine-readable storage medium of any preceding clause, the operations further comprising generating the second model for execution with a real time embedded system, and wherein the first model is executed within a non-embedded system.

19. The machine-readable storage medium of any preceding clause, the operations further comprising reducing a processing complexity associated with the first model.

20. The machine-readable storage medium of any preceding clause, the operations further comprising simplifying at least one computation employed during execution of the first model.

**Claims**

1. A system, comprising:

> a memory (108) that stores executable components; and
> a processor (110), operatively coupled to the memory (108), that executes the executable components, the executable components comprising:
>
> > an evaluation manager component (102) that identifies an input parameter (112) of a first model (114) based on a defined output parameter (116) of the first model (114), wherein the first model (114) is configured for execution by a non-embedded device;
a relation manager component (104) that determines one or more relations (118) in the first model (114), wherein relations of the one or more relations (118) comprise an intermediary parameter determined based on the input parameter (112) and the defined output parameter (116) of the first model (114); and
a model generator manager component (106) that generates a second model (120) that approximates the first model (114) and includes a replication of the one or more relations (122) of the first model (114), wherein the second model (120) is configured for execution by an embedded device.

2. The system of claim 1, further comprising a duplication component (202) that reproduces a relation of the one or more relations (118) based on a determination that the relation is expressed as a simple calculation or as a simple algorithm.

3. The system of either of claim 1 or 2, further comprising an evaluation component (202) that determines a polynomial function and a coefficient for inclusion in the second model (120), wherein the polynomial function is fitted to an observed tuple included in a relation of the one or more relations (118) in the first model (114).

4. The system of any preceding claim, further comprising an assessment component (206) that adds a linear combination of functions to the second model (120) based on a determination that a relation of the one or more relations (118) is approximated by the linear combination of functions, wherein the linear combination of functions approximates the relation in the second model (120).

5. The system of any preceding claim, further comprising an array component (208) that generates a lookup table comprising at least one breakpoint based on a determination that the at least one breakpoint approximates a relation of the one or more relations (118) while retaining a database table to a defined table size.

6. A method, comprising:

    identifying, by a system (100) comprising a processor (110), an input parameter (112) of a first model (114) based on a determination of a defined output parameter (116) derived from the first model (114);

determining, by the system (100), a network of relations (118) in the first model (114), wherein the network of relations (118) comprises an intermediary parameter and the defined output parameter of the first model (114), and wherein the intermediary parameter is determined based on the input parameter (112); and
generating, by the system (100), a second model (120) that includes a replication of the network of relations (122), wherein the second model (120) approximates the first model (114).

7. The method of claim 6, wherein the generating the second model (120) comprises generating the second model (120) for execution by an embedded system, and wherein the first model (114) is executed by a non-embedded system.

8. The method of either of claim 6 or 7, wherein the generating the second model (120) comprises reducing a complexity associated with the first model (114).

9. The method of claim 8, wherein the reducing the complexity comprises simplifying at least one computation employed during execution of the first model (114).

10. The method of any of claims 6 to 9, wherein the generating the second model (120) comprises reproducing the network of relations (118) based on a determination that a relationship of the network of relations (118) is expressed as a simple calculation or as a simple algorithm.

11. The method of any of claims 6 to 10, wherein the generating the second model (120) comprises:

    determining a relationship of the network of relations (118) is approximated by fitting a polynomial function to an observed tuple included in the network of relations (118);
    determining a coefficient for the polynomial function; and
    including the polynomial function and the coefficient in the second model (120).

12. The method of any of claims 6 to 11, wherein the generating the second model (120) comprises:

    determining a linear combination of functions based on a determination that a relationship of the network of relations (118) is approximated by the linear combination of functions; and
    adding the linear combination of functions to the second model (120), wherein the linear combination of functions approximates the relationship in the second model (120).

**13.** The method of any of claims 6 to 12, wherein the generating the second model (120) comprises creating a lookup table that comprises a breakpoint, wherein the breakpoint is chosen to approximate a relation of the network of relations while confining the lookup table to a defined table size.

**14.** The method of any of claims 6 to 13, wherein the identifying the input parameter comprises identifying a plurality of input parameters (112) that include the input parameter, the method further comprising:

> determining a number of input parameters in the plurality of input parameters (112) satisfies a defined number of input parameters;
> selecting a set of input parameters from the plurality of input parameters based on a determination that the set of input parameters correlates to the defined output parameter; and
> generating a correction factor based on the set of input parameters, wherein the set of input parameters are excluded from the determining the network of relations.

**15.** The method of claim 14, wherein the correction factor is a functional approximation of a difference between an uncorrected approximation of the defined output parameter and an ideal output parameter determined from the plurality of input parameters.

FIRST MODEL **114**

INPUT PARAMETER(S) **112** → NETWORK OF RELATIONS **118** → OUTPUT PARAMETER(S) **116**

SYSTEM **100**

EVALUATION MANAGER **102**

RELATION MANAGER **104**

MODEL GENERATOR MANAGER **106**

MEMORY **108**

PROCESSOR **110**

SECOND MODEL **120**

REPLICATION OF NETWORK OF RELATIONS **122**

# FIG. 1

FIRST MODEL 114

INPUT PARAMETER(S) 112

NETWORK OF RELATIONS 118

OUTPUT PARAMETER(S) 116

SYSTEM 200

EVALUATION MANAGER 102

DUPLICATION COMPONENT 202

RELATION MANAGER 104

EVALUATION COMPONENT 204

MODEL GENERATOR MANAGER 106

ASSESSMENT COMPONENT 206

EXCLUSION COMPONENT 210

OMITTED PARAMETERS 212

ARRAY COMPONENT 208

CORRECTION COMPONENT 214

MEMORY 108

PROCESSOR 110

SECOND MODEL 120

REPLICATION OF NETWORK OF RELATIONS 122

# FIG. 2

FIRST MODEL **114**

NETWORK OF RELATIONS **118**

INPUT PARAMETER(S) **112**

OUTPUT PARAMETER(S) **116**

SYSTEM **300**

EVALUATION MANAGER **102**

RELATION MANAGER **104**

MODEL GENERATOR MANAGER **106**

IMPLEMENTATION MANAGER **302**

INTERFACE COMPONENT **304**

MEMORY **108**

PROCESSOR **110**

SECOND MODEL **120**

REPLICATION OF NETWORK OF RELATIONS **122**

# FIG. 3

FIRST MODEL **114**

INPUT PARAMETER(S) **112**

NETWORK OF RELATIONS **118**

OUTPUT PARAMETER(S) **116**

SYSTEM **400**

EVALUATION MANAGER **102**

MACHINE LEARNING COMPONENT **402**

RELATION MANAGER **104**

MEMORY **108**

MODEL GENERATOR MANAGER **106**

PROCESSOR **110**

SECOND MODEL **120**

REPLICATION OF NETWORK OF RELATIONS **122**

# FIG. 4

START → Obtain indication of one or more output parameters of interest `502`

`500`

`504` Intermediary parameter(s) related to output parameter

NO → Discard intermediary parameter `506`

YES

`508` Network of relations a simple calculation/ algorithm

YES → Duplicate the simple calculation/ algorithm `510`

NO

`514` Determine coefficient ← YES — `512` Approximated by polynomial function

`516` Include polynomial function and coefficient

NO

`518` Approximated by linear combination of functions

YES → Determine linear combination of functions `520`

`524` NO

Create lookup table with selected breakpoints

`522` Add linear combination of functions

END

# FIG. 5

600

START

602

Identifying, by a system comprising a processor, an input parameter of a first model based on a determination of a defined output parameter derived from the first model

604

Determining, by the system, a network of relations in the first model, wherein the network of relations comprises an intermediary parameter and the defined output parameter of the first model, and wherein the intermediary parameter is determined based on the input parameter

606

Generating, by the system, a second model that includes a replication of the network of relations, wherein the second model approximates the first model

END

**FIG. 6**

START

702 —

Identifying a multitude of input
parameters of a first model based on a
determination of a defined output
parameter derived from the first model

704 —

Number of
input parameters
in the plurality of input
parameters satisfy a defined
number of input
parameters

NO

706 —

Use all input
parameters

YES

708 —

Selecting a set of input parameters of
the plurality of input parameters based
on a determination that the set of input
parameters correlates to the defined
output parameter

708 —

Generating a correction factor based on
the set of input parameters, wherein the
set of input parameters are excluded
from the determining the network of
relations

END

— 700

FIG. 7

START

800

802 — Identify input parameters of a first model

804 — Determine one or more relations in the first model

806 — Reduce a processing complexity of the first model

808 — Simplify at least one computation employed during execution of the first model

810 — Approximate a relationship of the network of relations by fitting a polynomial function to an observed tuple included in the network of relations

816 — Determine a linear combination of functions based on a determination that a relationship of the network of relations is approximated by the linear combination of functions

812 — Determine a coefficient for the polynomial function

818 — Add the linear combination of functions to the second model

814 — Include the polynomial function and the coefficient in the second model

END

FIG. 8

**FIG. 9**

1000

1002

CLIENT(S)

1004

SERVER(S)

COMMUNICATION
FRAMEWORK

1008

CLIENT DATA STORE(S)

1010

SERVER DATA STORE(S)

1006

# FIG. 10

Europäisches
Patentamt
European
Patent Office
Office européen
des brevets

# EUROPEAN SEARCH REPORT

**Application Number**

EP 18 17 5322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/229754 A1 (GOEBEL KAI FRANK [US] ET AL) 25 September 2008 (2008-09-25) * abstract * * paragraph [0003] * * paragraph [0006] - paragraph [0007] * * paragraph [0020] - paragraph [0025] * * paragraph [0039] - paragraph [0066] * * paragraph [0075] - paragraph [0084] * * figures 7, 8 * | 1-15 | INV. G06F17/50 |
| X | US 2010/063790 A1 (TRUSCOTT ANTHONY J [GB] ET AL) 11 March 2010 (2010-03-11) * abstract * * paragraph [0001] - paragraph [0005] * * paragraph [0026] - paragraph [0028] * * paragraph [0034] * | 1-15 | |

**TECHNICAL FIELDS SEARCHED (IPC)**

G06F

The present search report has been drawn up for all claims

| Place of search | Date of completion of the search | Examiner |
|---|---|---|
| Munich | 28 September 2018 | Radev, Boyan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 5322

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2018

| Patent document cited in search report | Publication date | Patent family member(s) | | Publication date |
|---|---|---|---|---|
| US 2008229754 A1 | 25-09-2008 | NONE | | |
| US 2010063790 A1 | 11-03-2010 | AT | 553421 T | 15-04-2012 |
| | | CN | 101611357 A | 23-12-2009 |
| | | EP | 2126640 A1 | 02-12-2009 |
| | | EP | 2498154 A1 | 12-09-2012 |
| | | JP | 5290199 B2 | 18-09-2013 |
| | | JP | 2010513787 A | 30-04-2010 |
| | | US | 2010063790 A1 | 11-03-2010 |
| | | WO | 2008078097 A1 | 03-07-2008 |

EPO FORM P0459

For more details about this annex : see Official Journal of the European Patent Office, No. 12/82